# EUROPEAN PATENT APPLICATION

(11) **EP 4 811 800 A1**
(43) Date of publication of application: **23.09.2026**
(21) Application number: 25275017.9
(22) Date of filing: 19.03.2025
(51) Int. Cl.: H04N 21/44, G06F 3/14, G09G 5/00, G09G 5/393, H04N 21/426, H04N 19/132

(54) **TRANSMISSION OF HIGH FRAME RATE VIDEO**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The application relates to a method of transmitting high frame rate video using a standard interface video format by packing multiple frames of the high frame rate video into rolling buffer to obtain an output frame.

## Description

### FIELD

The present invention relates to transmitting high frame rate video using a standard interface video format typically used for transmitting video over a standard video interface.

### BACKGROUND

A video interface is a standardized connection that facilitates the communication of video data between devices and includes any data format or control signals to enable this communication. Example video interfaces include HDMI, ARINC818, Display Port, DVI and SMPTE SDI. Most current video interfaces operate at a frame rate of 50/60 Hz as this is the requirements of the television and cinema industries.

However, in augmented reality applications the displayed image needs to conform to fast moving real-world objects. In addition, in augmented reality applications, the user may move around the scene changing their point of view and requiring additional updates to the displayed image. Hence, these applications would benefit from having higher refresh rates that used by the television and cinema industries e.g. refresh rates of up to about 960 Hz. In addition, in order to ensure an augmented reality display correctly displays fast moving objects in a view that aligns with the user's current point of view, low latency in image processing can be beneficial.

Similarly, in competitive eSports, it can be beneficial for a user to be provided with low latency and high frame rate representations of fast moving objects to enable the user to respond to the eSport action competitively.

Whilst Video interface standards such as DisplayPort 1.4a support higher frame rate such as 120 Hz, for application such as competitive eSports and virtual reality which require lower latency and high refresh rates for fast response time and a smother experience, it would be desirable to achieve higher frame rates without the use of specialist hardware or video interfaces.

### SUMMARY

According to a first aspect of the present invention, there is provided a computer implemented method of transmitting high frame rate video using a standard interface video format, wherein the standard interface video format has a lower frame rate than the high frame rate video. The method comprises packing multiple frames of the high frame rate video into rolling buffer to obtain an output frame, by: inputting the multiple frames of the high frame rate video into the rolling buffer from an initial position in the rolling buffer to a final position in the rolling buffer; and in response to the inputting reaching the final position in the rolling buffer continuing the inputting from the initial position in the rolling buffer. The also comprises outputting the output frame from the rolling buffer while the multiple frames of the high frame rate video are being input into the rolling buffer by: outputting the output frame from the rolling buffer from the initial position in the rolling buffer to the final position in the rolling buffer; and in response to the outputting reaching the final position in the rolling buffer continuing the outputting from the initial position in the rolling buffer. The method also comprises transmitting the output video frame to a receiving device via the standard video interface. The rolling buffer enables the frames of high frame rate video to be packed into an interface video frame. In addition, the rolling buffer can accommodate any differences in speed in the inputting and outputting process to ensure the high frame rate frames are correctly transmitted.

In an example, the rolling buffer is sized to match the rate of the transmission of the output video frame. This enables the rolling buffer to be suitably sized and avoids using unnecessarily large rolling buffers.

In an example, inputting multiple frames of the high frame rate video into the rolling buffer to obtain the output frame further comprises inputting at least one break line into the rolling buffer after each frame of the multiple frames of the high frame rate video, wherein the break line comprises a line of pixels and each pixel in the line of pixels has a predefined value. The break lines have two advantages. Firstly, they can be used to distinguish frames of high frame rate video in the interface frame. In addition, if the outputting occurs at a faster rate than the inputting then the interface frame can be packed with break lines to prevent the rolling buffer being starved of information.

In some examples, the rolling buffer is a rolling buffer of a video encoder, and outputting the output frame comprises encoding the rendered multiple frames of the high frame rate video into the standard interface video format prior to rending the high frame rate video into the rolling buffer. The rendering can be done on a pixel-by-pixel basis as part of the inputting. The rendering ensures that the pixels are in the correct format for transmission and so enables the use of the standard video interface.

In some examples, the rolling buffer is a rolling buffer of a high frame rate video generator; outputting the output frame comprises outputting the output frame to a video encoder; and the method further comprises: encoding by the video encoder, the output frame in the standard interface video format as the output frame is received by the video encoder before transmitting the output video frame to a receiving device via the standard video interface. As above, the encoding can be done on a pixel-by-pixel basis with no frame buffering. In this regard, the output frame is output pixel-by-pixel on a continuous basis rather than waiting for an entire frame in the frame buffer. The encoding can then occur as part of the transmission process.

In some examples, the inputting multiple frames of the high frame rate video into the rolling buffer and the outputting the output frame from the rolling buffer do not use a frame buffer. Not using a frame buffer and instead having the inputting and outputting be on a pixel-by-pixel process from the rolling buffer reduces latency associated with needing to form an entire frame being transmission and thus allows faster transmission of the high frame rate video frames.

According to a second aspect a computer-implemented method of receiving high frame rate video using a standard interface video format is provided. The standard interface video format has a lower frame rate than the high frame rate video. The method comprises receiving, from a source over the standard video interface, a frame of video in the standard interface video format, wherein the received frame of video comprises multiple frames of high frame rate video. The method also comprises writing, on a pixel-by-pixel basis, the frame of video into a rolling buffer by writing pixels of the frame of video into the rolling buffer from an initial position in the rolling buffer to a final position in the rolling buffer as the frame of video is received from the source. The method also comprises determining a beginning of a first frame of high frame rate video of the multiple frames of high frame rate video is being written into the rolling buffer; and after elapse of a predetermined number of pixels or a predetermined time from the beginning of the first frame of high frame rate video being written into the rolling buffer, and outputting, to a display device, on a pixel-by-pixel basis, pixels of the first frame of high frame rate video from the rolling buffer until the first frame of high frame rate video has been output to the display device. The method further comprises determining a beginning of a second frame of high frame rate video of the multiple frames of high frame rate video is being written into the rolling buffer; and after elapse of the predetermined number of pixels or the predetermined time from the beginning of the second frame of high frame rate video being written into the rolling buffer, outputting, to the display device, on a pixel-by-pixel basis, pixels of the second frame of high frame rate video from the rolling buffer until the second frame of high frame rate video has been output to the display device. Thus, when video is received that comprises high frame rate video frames packed in a received frame comprising an interface video frame, the rolling buffer can be used to enable any processing on the frame and ensure the display device is provided with pixels at a correct rate without being starved of data.

In some examples of the second aspect, the frame of video comprises one or more instances of at least one break line, wherein each instance of the at least one break line separates a frame of the multiple frames of high frame rate video from another frame of the high frame rate video, and each the break line comprises a line of pixels and each pixel in the line of pixels has a predefined value; and wherein determining the beginning of a second frame of high frame rate video occurs in response to the break line. Hence, the break lines can be used to determine the start of each frame of the high frame rate video and ensure high frame rate video frames are correctly provided to the display device. The break lines can be discarded either by not being written into the rolling buffer or being discarded upon output from the rolling buffer rather than being output to the display device.

In some examples, the method of the second aspect further comprises converting a pixel packing format of the received frame of video into a pixel packing format of the display device. This can be done on a pixel-by-pixel basis before the pixels of the received frame are written into the rolling buffer. Alternatively, this can be done on a pixel-by-pixel basis as the pixels of the high frame rate video frames are output from the rolling buffer. This conversion ensures the pixels can be displayed by the display device and prevents the need for the display device itself to perform the conversion.

In a third aspect, a computer-implement method of communicating, using a standard interface video format, high frame rate from video source to a video receiving apparatus. The method comprises at the video source performing a method as defined above with respect to the first aspect. The method also comprises at the video receiving apparatus performing a method as defined above according to the second aspect. Hence, in some examples, a method can comprise both the transmission and receipt of high frame rate video in interface video frames. This allows a low latency communication of high frame rate video using standard interface video formats.

In some examples of all three aspects, the standard interface video format comprises one of HDMI, ARINC818, display port, VGA, SMPTE SDI, or DVI. These are some typical standard interface video formats that can be adapted to transmit/receive high frame rate video reducing the requirements for specific video interface formats for high frame rate video.

In some examples of all three aspects, the high frame rate video has a frame rate of at least 120 frames per second. This provides video at a suitable frame rate for augmented reality applications without causing aliasing or other motion problems.

In some examples of all three aspects, the high frame rate video has a lower resolution than the standard interface video format. This allows multiple frames of the high frame rate video to be packed into a single frame of video in the standard interface video format.

In a fifth aspect a video source is defined. The video source comprises a standard video interface configured to transmit video in a standard video interface format; a processor; and a memory, the memory storing instructions that when executed cause the processor to perform a method. The method comprises packing multiple frames of high frame rate video into rolling buffer to obtain an output frame, by: inputting the multiple frames of the high frame rate video into the rolling buffer from an initial position in the rolling buffer to a final position in the rolling buffer; and in response to the inputting reaching the final position in the rolling buffer continuing the inputting from the initial position in the rolling buffer. The method also comprises outputting the output frame from the rolling buffer while the multiple frames of the high frame rate video are being input into the rolling buffer by: outputting the output frame from the rolling buffer from the initial position in the rolling buffer to the final position in the rolling buffer; and in response to the outputting reaching the final position in the rolling buffer continuing the outputting from the initial position in the rolling buffer. The method further comprises transmitting the output video frame to a receiving device via the standard video interface. Hence, the video source can be used to transmit high frame rate video using a standard video interface. Thus, there is no requirement for specific or custom interfaces for transmitting high frame rate video and the high frame video can be transmitted using off the shelf video interfaces.

In some examples, the video source further comprises a high frame rate video camera configured to output frames of high frame rate video. Thus, the high frame rate video can be obtained from a video camera and then be processed for transmission to e.g. a display device.

In some examples, the rolling buffer is sized to match the rate of the transmission of the output video frame. This enables the rolling buffer to be suitably sized and avoids using unnecessarily large rolling buffers.

In some examples, inputting multiple frames of the high frame rate video into the rolling buffer to obtain the output frame further comprises inputting at least one break line into the rolling buffer after each frame of the multiple frames of the high frame rate video, wherein the break line comprises a line of pixels and each pixel in the line of pixels has a predefined value. The break lines have two advantages. Firstly, they can be used to distinguish frames of high frame rate video in the interface frame. In addition, if the outputting occurs at a faster rate than the inputting then the interface frame can be packed with break lines to prevent the rolling buffer being starved of information.

In some examples, the rolling buffer is a rolling buffer of a video encoder, and wherein outputting the output frame comprises encoding the rendered multiple frames of the high frame rate video into the standard interface video format prior to rending the high frame rate video into the rolling buffer. The rendering can be done on a pixel-by-pixel basis as part of the inputting. The rendering ensures that the pixels are in the correct format for transmission and so enables the use of the standard video interface.

In some examples, the rolling buffer is a rolling buffer of a high frame rate video generator; and outputting the output frame comprises outputting the output frame to a video encoder, wherein the video encoder is configured to encode the output frame in the standard interface video format as the output frame is received by the video encoder before transmitting the output video frame to a receiving device via the standard video interface. As above, the encoding can be done on a pixel-by-pixel basis with no frame buffering. In this regard, the output frame is output pixel-by-pixel on a continuous basis rather than waiting for an entire frame in the frame buffer. The encoding can then occur as part of the transmission process.

In some examples, the inputting multiple frames of the high frame rate video into the rolling buffer and the outputting the output frame from the rolling buffer do not use a frame buffer. Not using a frame buffer and instead having the inputting and outputting be on a pixel-by-pixel process from the rolling buffer reduces latency associated with needing to form an entire frame being transmission and thus allows faster transmission of the high frame rate video frames.

In a fifth aspect a video receiving apparatus is defined. The video receiving apparatus comprises a display device configured to output frames of video to a user; a standard video interface configured to receive video in a standard interface video format; a processor; and a memory, the memory storing instructions that when executed cause the processor to perform a method. The method comprises receiving, from a source over the standard video interface, a frame of video in the standard interface video format, wherein the received frame of video comprises multiple frames of high frame rate video; and writing, on a pixel-by-pixel basis, the frame of video into a rolling buffer by writing pixels of the frame of video into the rolling buffer from an initial position in the rolling buffer to a final position in the rolling buffer as the frame of video is received from the source. The method also comprises determining a beginning of a first frame of high frame rate video of the multiple frames of high frame rate video is being written into the rolling buffer; and after elapse of a predetermined number of pixels or a predetermined time from the beginning of the first frame of high frame rate video being written into the rolling buffer, outputting, to the display device, on a pixel-by-pixel basis, pixels of the first frame of high frame rate video from the rolling buffer until the first frame of high frame rate video has been output to the display device. The method further comprises determining a beginning of a second frame of high frame rate video of the multiple frames of high frame rate video is being written into the rolling buffer; and after elapse of the predetermined number of pixels or the predetermined time from the beginning of the second frame of high frame rate video being written into the rolling buffer, outputting, to the display device, on a pixel-by-pixel basis, pixels of the second frame of high frame rate video from the rolling buffer until the second frame of high frame rate video has been output to the display device. Thus, when video is received that comprises high frame rate video frames packed in a received frame comprising an interface video frame, the rolling buffer can be used to enable any processing on the frame and ensure the display device is provided with pixels at a correct rate without being starved of data.

In some examples, the video receiving apparatus comprises a head mounted display. Hence, the video receiving apparatus can be used for virtual reality or augmented reality applications.

In some examples, the frame of video comprises one or more instances of at least one break line, wherein each instance of the at least one break line separates a frame of the multiple frames of high frame rate video from another frame of the high frame rate video, and each the break line comprises a line of pixels and each pixel in the line of pixels has a predefined value; and determining the beginning of a second frame of high frame rate video occurs in response to the break line. Hence, the break lines can be used to determine the start of each frame of the high frame rate video and ensure high frame rate video frames are correctly provided to the display device. The break lines can be discarded either by not being written into the rolling buffer or being discarded upon output from the rolling buffer rather than being output to the display device.

In some examples, the method further comprises converting a pixel packing format of the received frame of video into a pixel packing format of the display device. This can be done on a pixel-by-pixel basis before the pixels of the received frame are written into the rolling buffer. Alternatively, this can be done on a pixel-by-pixel basis as the pixels of the high frame rate video frames are output from the rolling buffer. This conversion ensures the pixels can be displayed by the display device and prevents the need for the display device itself to perform the conversion.

In a sixth aspect a system for communicating high frame rate video is defined. The system comprises a video source according to the fourth aspect and a video receiving apparatus according to the fifth aspect. Hence, in some examples, a system can comprise apparatus for both the transmission and receipt of high frame rate video in interface video frames. This allows a low latency communication of high frame rate video using standard interface video formats.

### BRIEF DESCRIPTION OF THE FIGURES

Embodiments of the invention will now be described by way of example only with reference to the figures, in which:
Figure 1 is a flow chart showing a method for transmitting high frame rate video using a standard interface video format;
Figure 2 shows multiple frames of high frame rate video packed into a single standard interface video format frame;
Figure 3 is a flow chart showing a method performed by a video receiving device for processing high frame rate video in a standard interface video format frame;
Figure 4A and Figure 4B show apparatus for carrying out the methods of transmitting and processing high frame rate video packed in a standard interface video format frame; and
Figure 5 shows a computing device that can be used to perform aspects of this application.

### DETAILED DESCRIPTION

A majority of current video interfaces have a frame rate of between 50Hz and 60Hz. This frame rate is effective for eliminating "flicker" in television and cinema screens and, since standard video interfaces are designed for these industries, suitable frame rates can be considered achieved. However, when a user is moving around a scene with virtual objects such as in virtual reality or augmented reality applications, the frame rate determines a spatial displacement between views. This means a 50Hz to 60Hz frame rate can result in a virtual or augmented reality environment that is discontinuous. In situations where a user may need to react to objects in the environment, the 50Hz to 60Hz frame rate can result in a view changing too slowly to enable efficient reactions. It is thus desirable to provide a faster frame rate for video. However, this can require the design of custom video interfaces which prevents the use of off-the-shelf equipment for virtual reality and augmented reality applications. This makes the setting up and maintenance of such systems difficult.

The current application is directed to using standard video interfaces for transmitting high frame rate or high speed video in a fashion that does not introduce artificial latency which would impact the high speed presentation of the high frame rate video. A standard video interface is a standardized connection that can be used to transfer video between two points such as a video source and a video end point (e.g. a display). A standard video interface can also be known as an industrial video interface standard. A video interface supports a standard video format wherein video is transmitted over the video interface in the video format. For example, HDMI, ARINC818, display port, DVI and SMPTE SDI. As mentioned above, a majority of current video interfaces use video formats that have a frame rate of between 50Hz and 60Hz.

The current application focuses on situations where frames of the high frame rate or high speed video are smaller than the frames of standard video format associated with the standard video interface in that they comprise fewer pixels. In some examples, the frames of the high frame rate video are smaller because the size of each frame is smaller in that it covers a smaller physical area while potentially maintaining resolution. In addition, or as an alternative, the high frame rate video is relatively low-resolution video in that a frame of the high frame rate video has a lower resolution than the standard video format associated with the standard video interface. This video can be relatively low resolution because, for example, it comes from a relatively low-resolution camera such as a night vision camera or a high speed but low-resolution camera. In other examples, the resolution of the high frame rate can be reduced in order to enable the high frame rate.

The application defines packing or filling more than one frame of high frame rate video (otherwise known as high speed video) into a single frame of video in a video format associated with the standard video interface. The video format associated with the standard video interface can also be known as a standard video format, an industrial video format, a standard interface video format or an industry standard video format. Examples of such industry standard video formats include frames composed of rasters of packed pixels in formats such as RGB (red, green, blue), grey scale images and Luma and Chroma component colour formats such as YCbCr (YUV) with up to, for example, 10 bits per component. The more than one or multiple frames of high frame rate video packed into a single frame of standard video format video can comprise an integer or non-integer number of frames. For example, 1.5, 1.8, 2, 2.5, 2.8 etc frames of high frame rate video can be packed into a single frame of standard video format video.

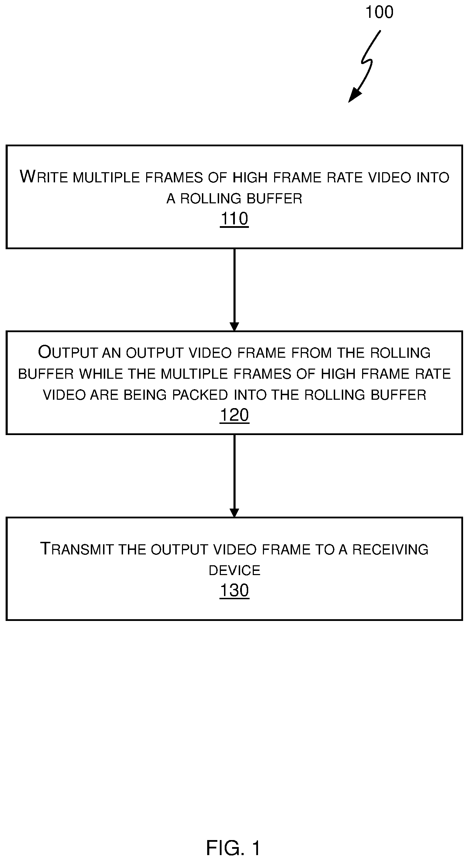

Figure 1 is a flowchart showing a method 100 for transmitting high frame rate video using a standard interface video format in accordance with the present application.

At step 110, the method comprises packing multiple frames of the high frame rate video into a rolling buffer wherein the rolling buffer is a buffer for video in the standard interface video format. While in some examples the buffer can be a buffer sized to fit an entire frame of video in the standard interface video format this is not necessary and in other examples the buffer may be a buffer for a part of a frame of video in the standard video interface format. The act of packing can also be referred to as writing, padding, outputting into a rolling buffer. The rolling buffer can also be known as a first-in-first-out (FIFO) buffer or a circular buffer. As mentioned above, the multiple frames of high frame rate video can comprise more than one frame of high frame rate video. In some examples, the more than one frame of high frame rate video can comprise a single whole frame and a fraction of a second frame of high frame rate video. In other examples, the more than one frame of high frame rate video can comprise multiple whole frames with or without a fraction of a further frame of high frame rate video. The result of the packing can be considered an output frame or resultant interface video frame.

As the buffer in step 110 is a rolling buffer, the packing comprises inputting or writing the multiple frames of the high frame rate video into the rolling buffer from an initial position in the rolling buffer to a final position in the rolling buffer. This can comprise sequentially writing/inputting the pixels from each frame of the multiple frames of the high frame rate video into the rolling buffer from the initial position of the rolling buffer to the final position of the rolling buffer. In other words, each pixel of the multiple frames of the high frame video is written into the rolling buffer from the initial position to the final position. The buffer is a rolling buffer. This means that when the inputting or writing reaches the final position in the rolling buffer, the inputting or writing continues again from the initial position overwriting any previously written content. This differs from frame buffers where double or triple buffering is used and once a final position of a buffer is reached, writing/inputting continues in a subsequent buffer.

At step 120, the method comprises outputting the output frame from the rolling buffer. The outputting can also be referred to as reading or sending. The outputting occurs while the multiple frames of the high frame rate video are being input into the rolling buffer. The outputting comprises outputting the output frame from the rolling buffer from the initial position in the rolling buffer to the final position in the rolling buffer, and once the final position has been reached continuing the outputting from the initial position in the rolling buffer. In this regard, the pixels of the output frame are output/read sequentially from a first pixel at the initial position in the rolling buffer to a pixel at the final position in the rolling buffer before continuing the outputting/reading from the initial position in the rolling buffer. Again, this differs from frame buffers where double or triple buffering is used and once a final position of a buffer is searched, outputting/reading continues in a subsequent buffer.

At step 130, the method comprises transmitting the output video frame to a receiving device, which may contain a display device for displaying the output video frame. The transmitting is performed via the standard video interface. The transmitting occurs in any known way and can comprise transmitting initial pixels of the output frame while other pixels of the output frame are still being written to the rolling buffer. As discussed below, in some examples, an encoding can be applied to the output video frame or the multiple frames of high frame rate video before transmission to ensure the frame(s) are in a proper video format for transmission via the standard video interface.

The above method enables a standard video interface to be used to transmit high frame rate video without compromising the speed of the high frame rate video. In particular, there is no frame buffering of an entire frame of the standard interface video format frame and instead the packing of the multiple frames of high frame rate video occurs live but with more than one frame of high frame rate video in each standard interface video format frame. This means that the transmitting can occur at a rate that enables high frame rate processing of the high frame rate video frames while using the standard interface and the standard interface format.

As mentioned above, the method is used when the frames of the high frame rate video are smaller than the frames of the video format of the standard video interface. In particular, the method is used when: ${Nb}_{H} \times {Fr}_{H} < {Nb}_{I} \times {Fr}_{I}$ wherein *Nb_{H}* is the number of bits of a frame of the high frame rate video, *Fr_{H}* is the frame rate of the high frame rate video, *Nb_{I}* is the number of bits of a frame of video in the interface video format and *Fr_{I}* is the frame rate of video in the interface video format. As discussed above, the size e.g. number of bits of a frame of the high frame rate video can be smaller than a size e.g. number of bits of a frame of the interface video format in that either one or both of (a) the frames are smaller in that they cover an image for a smaller area or (b) the resolution of the high frame rate video is lower. Despite this restriction, the method 100 can still find utility. For example, when the high frame rate video has a resolution and size of 720 pixels, the interface video format has a resolution and size of 1280 pixels then 1.8 frames of high frame rate video can be packed into a single frame of interface format video. In another example, the standard video interface DisplayPort 1.4a has a 4K pixel size (e.g. a resolution of 3840 × 2160) and a frame rate of 120Hz. This results in a pixel rate of 3840 × 2160 × 120 = 995.3 Mpixels/s. This could be used to transport a 720p (e.g. a resolution of 1280 × 720) video at a frame rate of 960 Hz as 1280 × 720 × 960 = 884.7 Mpixels/s. In this example 9 high frame rate video frames are packed into each single frame of interface format video. The frame rate of 960Hz enables frame rates that approach optical reality in that the spatial displacement between frames is smooth and realistic, particularly in virtual reality and augmented reality applications.

As discussed above the method comprises inputting 110 multiple frames of the high frame rate video into the rolling buffer and outputting 120 the output frame from the rolling buffer while the multiple frames of the high frame rate video are being input into the rolling buffer. In order to prevent the overwriting of data before the data is output by the outputting 120 then: ${Nb}_{H} \times {Fr}_{H} < {Nb}_{I} \times {Fr}_{I}$ wherein *Nb_{H}* is the number of bits of a frame of the high frame rate video, *Fr_{H}* is the frame rate of the high frame rate video, *Nb_{I}* is the number of bits of a frame of video in the interface video format and *Fr_{I}* is the frame rate of video in the interface video format. This means the average data rate of interface frames must be less than the average time to process a frame of the high frame rate video. In this regard, it is noted that the time to process a frame of video tₓ is given by *tₓ =* $\frac{1}{{Fr}_{x}}$ and that the time to process a frame of video is the time to process a bit in the frame multiplied by the number of bits e.g. tₓ *= Nbₓ* × *tpₓ.* Hence, ${Fr}_{x} = \frac{1}{{Nb}_{x} \times {tp}_{x}}$. Thus: ${Nb}_{H} \times \frac{1}{{Nb}_{H} \times {tp}_{H}} < {Nb}_{I} \times \frac{1}{{Nb}_{I} \times {tp}_{I}} \to {tp}_{I} < {tp}_{H}$ As such, bits of the interface video frame are always processed faster than the high frame rate video frame and there is no risk of data being overwritten before it is sent. As in some examples, the interface video format processes individual bits faster than the high frame rate video format, the outputting 120 from the rolling buffer can be faster than the inputting 110 to the rolling buffer. In order to ensure this does not result in the outputting 120 catching up with inputting 110 and hence the rolling buffer being starved of data, the packing of the high frame rate video frames into the rolling buffer can involve inserting break lines or blank pixels after each frame or specific frames of the high frame rate video in order prevent the rolling buffer from being starved of data. The outputting of the break lines or blank pixels can occur at a faster rate than the outputting of the pixels of high frame rate video and at a suitable rate to ensure the rolling buffer is not starved of data. The break lines and/or lines of blank pixels can be output as necessary to ensure the rolling buffer is not starved of data.

In some examples, the break lines or blank lines of pixels can be used to encode control information for the receiving device. For example, the break lines or blank lines of pixels can be used to encode information about the frame rate of the high frame rate video to ensure the receiving device displays the high frame rate video at the correct frame rate.

As mentioned above, the multiple frames of high frame rate video 210a-210d are packed into a rolling buffer. In some examples, the rolling buffer can be sized to accommodate a frame of the interface video format. In other examples, the rolling buffer is sized to match the rate of transmission of the output video frame. In this regard, the rolling buffer can be sized based on a difference between the rate of inputting 110 and the rate of outputting 120 to ensure the rolling buffer is not starved of data. In this regard, the rolling buffer can be sized to accommodate a suitable number of break lines or blank pixels to allow the inputting 110 to catch up to the outputting 120.

As mentioned above multiple frames of high frame rate video are input 110 into the rolling buffer such that a single output frame in a format compatible with the standard interface video format contains multiple high frame rate video frames. In some examples, a receiving device may be able to automatically determine a boundary between frames based on either a pre-agreed standard or based on control data or configuration data sent as part of the output frame. However, in addition or as an alternative, the step of packing 110 the multiple frames of the high frame rate video into the rolling buffer can further comprise inputting a marker line of pixels into the rolling buffer after each frame of the multiple frames of the high frame rate video. In some examples, the marker line of pixels can form part of the break lines of pixels. In other examples, the marker line of pixels is in addition to the break line of pixels. The marker line of pixels can be an indication to the receiving device as to the boundary between the frames of the high frame rate video. The marker line of pixels can comprise a line of pixels wherein each pixel in the line of pixels has a predefined value. In some examples the marker line can comprise a single line of pixels but in other examples the marker line can comprise two or more lines of pixels. The marker line of pixels can comprise a predefined sequence of pixels. In some examples, the marker line could comprise a line of black pixels, followed by a line of white pixels, followed by a second line of black pixels. In other examples, the marker line may comprise alternating black and white pixels or a single line of all black or all white pixels. However, these are merely examples, and the skilled person would be aware any suitable predefined values of pixels could be used to indicate a division between high frame rate video frames.

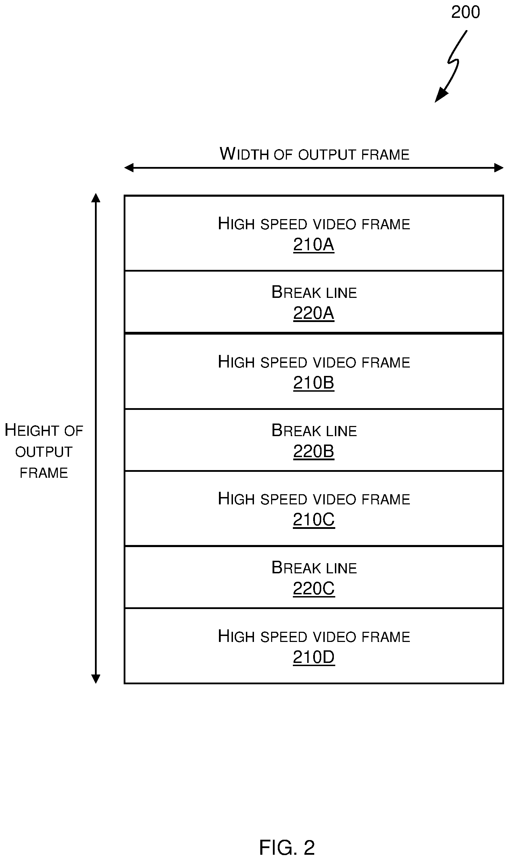

Figure 2 shows an example of an output frame of video in the standard video interface video format 200 packed to contain multiple frames of the high frame rate video 210a-210d. In the example shown in Figure 2 the multiple frames of the high frame rate video 210a-210d are divided by break lines 220a-220c as described above. As shown in Figure 2 multiple frames of the high frame rate video 210a-210d are packed into the single standard video interface format frame 200. This means that the multiple frames of the high frame rate video 210a-210d can be transmitted in the space/time of the single standard interface format frame 200. As described above, since the single standard interface format frame is being output as it is packed/generated rather than being frame buffered the latency in sending the high frame rate video can be reduced allowing the standard video interface format to be used to transmit high frame rate video.

While, as mentioned above, in some examples, the high frame rate video frames 210a-210d are distinguished via marker lines, in addition or as an alternative, other techniques can be used to indicate how the high frame rate video frames 210a-210d are packed into an output frame 200. For example, a first frame of a video transmission or each output frame 200 can comprise control information indicating the output frames 200 contain high frame rate video frames 210a-210d or the control information can be contained in break lines

In some examples, the high frame rate video frames 210a-210d are in a different video pixel format to the standard video interface video. In these examples, the pixels of the high frame rate video frames 210a-210d are encoded into a same pixel format as the standard interface video format to enable the high frame rate video frames 210a-210d to be transmitted using the standard video interface. This can be done by, for example, ensuring the pixels of the high frame rate video frames 210a-210d are encoded in the pixel encoding used for the standard interface video format. For example, if the standard interface video format uses RGB24, RGB32 or YCbCr then the frames of high frame rate video 210a-210d can also be encoded using RGB24, RGB32 or YCbCr. In some instances, this can be done on a pixel-by-pixel rather than a frame-by-frame basis before or after the high frame rate video frames 210a-210d are packed 110 into the rolling buffer. For example, the source of the high frame rate video itself can encode the pixels of the high frame rate video 210a-210d to ensure they are in the correct format. Alternatively, this pixel-by-pixel conversion can be done after the output video frame 200 is output from the rolling buffer but before the output video frame 200 is transmitted to a receiving device. In either example, the high frame rate video frames 210a-210d or the output video frame 200 is encoded into the pixel format compatible with or the same as the standard interface video format on a pixel by pixel (as opposed to a frame-by-frame basis) to avoid the need to introduce frame buffering and hence introduce latency. In examples where the high frame rate video frames and the standard interface video format have the same pixel packing format then such conversion may not be necessary.

While the above has concentrated on a method performed by the video source device or video transmitting device, the application also relates to a method performed by a video receiving device which can comprise a display device.

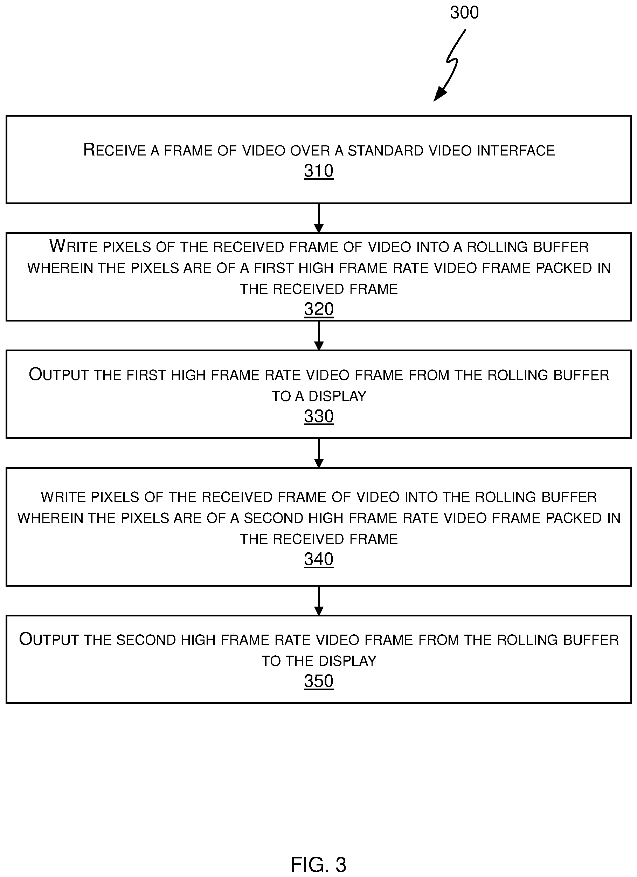

Figure 3 is a flowchart showing a method 300 performed by a video receiving device which can comprise a display device. The method 300 comprises at stage 310 receiving a frame of video from a source over a standard video interface. The frame of video is received in the standard video interface format and comprises an output video frame 200 as described above. As the output video frame is transmitted on a pixel-by-pixel basis as opposed to a frame-by-frame basis, the frame of video is received on a pixel-by-pixel basis. The received frame comprises multiple frames of high frame rate video.

As step 320, the method comprises writing, inputting or otherwise storing pixels of the received frame of video into a rolling buffer. As with the rolling buffer at the sending device, the rolling buffer can also be known as a first-in-first-out (FIFO) buffer or a circular buffer. As mentioned above, the output video frame 200 while being in an interface video format comprises multiple high frame rate video frames. At step 320, the pixels of the received video frame are written into the rolling buffer as they are received such that a first frame of the high frame rate video is written into the rolling buffer. At step 330, the method comprises outputting the first high frame rate video from the rolling buffer on a pixel-by-pixel basis to a display device of the video receiving device as the pixels of the received video frame are being written into the rolling buffer. The outputting 330 can occur delayed or offset from the writing 320 to account for any differences in the rate at which pixels are read into and out of the rolling buffer and to ensure the rolling buffer is never starved of data. To this end, the inputting 320 prefills the rolling buffer for a set time/number of pixels chosen based on a comparison of the inputting and outputting rates. Once this set time or number of pixels has been reached then the outputting in step 330 commences.

The method comprises, at step 340, writing, inputting or otherwise storing a second frame of the high frame rate video from the received frame of video in the rolling buffer. This step occurs after the writing or inputting 320 of the first high frame rate video frame has complete. In some examples, there may be delay as blank pixels are discarded. However, in other such examples no display is present and the writing 340 of the second frame of high frame rate video commences immediately after the writing 320 of the first frame of high frame rate video completes.

At step 350, the method comprises, outputting this second high frame rate video frame from the rolling buffer to the display device on a pixel-by-pixel basis. In some examples, rather than following continuously from the outputting 330 of the first frame of high frame rate video, this outputting 330 can be delayed or offset based on the writing or inputting 340 of the second frame of high frame rate video. The start of the second frame of high frame rate video can be determined, for example, using break lines of pixels, marker lines of pixels, or based on control information. The outputting 350 of the second high frame rate video frame can then begin after a set time or number of pixels of the writing/inputting 340 of the second frame of high frame rate video. The set time or number of pixels after the start of the inputting that the outputting starts can be the same for each high frame rate video frame. In other words, the set time or number of pixels after the start of the inputting of the first frame of high frame rate video at which the outputting of the first frame of high frame rate video starts can be the same time or number of pixels after the start of the inputting of the second frame of high frame rate video at which the outputting of the second frame of high frame rate video starts. This delay in the outputting for the second (or other) high frame rate video frame means the rolling buffer can be prefilling with the second (or other) frame of high frame rate video to ensure the rolling buffer is never starved of data. As such, the outputting of the frames of high frame rate video may not be a continuous process and instead may start and stop for each high frame rate video frame even though the outputting is done on a pixel-by-pixel basis.

The above steps of writing and outputting frames of high frame rate video into the rolling buffer can occur or otherwise be repeated for all high frame rate video frames in the received frame. In some examples more than one received frame of received video is received and the method can proceed using the same rolling buffer for all received frames of received video.

In some examples, the display device of the video receiving device may comprise a further buffer, such as a display buffer, or other display functionality which the display device uses to process the video for display by a display of the display device. The form of the display device, the display buffer, display functionality and the way in which the display device drives the display can vary depending upon the display device and display used and would be known to the skilled person.

In order to ensure the high frame rate video is output at the correct frame rate, the receiving device can be pre-programmed with the timing of the high frame rate video. Alternatively, the receiving device can extract control information from the break line of pixels or elsewhere in the received frame of video, wherein the control information indicates the timing of the high speed video output to the display device. In this regard, the display device can reconstruct any control signal such as vertical and horizontal sync necessary to drive the display

If the pixel packing format of the pixels in the received frame of video is not the pixel packing format required for display of the high frame rate video then the pixels for the received frame of video can be converted to the correct pixel packing format on a pixel-by-pixel basis either as the pixels are written into the rolling buffer or as pixels are read out from the rolling buffer.

As mentioned above, in some examples, the output frame 200 can comprise marker lines 220a-220c used to distinguish between high frame rate video frames 210a-210d and break lines used to ensure the rolling buffer of the sending device is not starved of information. The received video frame received by the video receiving device comprises the output frame 200. Thus, in some examples, the received video frame can comprise the multiple high frame rate video frames 210a-210d and the break lines 220a-220c. In these examples, the method can comprise identifying the start of a new frame of high frame rate video based on detecting a break line 220a-220c or marker line. The break lines 220a-220c themselves do not represent active pixels so are discarded from the rolling buffer. In other examples, the receiving device can have pre-agreed a size of the high frame rate video frames 210a-210d with the video source and thus the identifying of the high frame rate video frames can be based on the pre-agreed size of the high frame rate video frames. In yet further examples, at least the first received video frame can comprise control information indicating a size of the high frame rate video frames 210a-210d and the identifying the high frame rate video frames can occur based on the size in this control information.

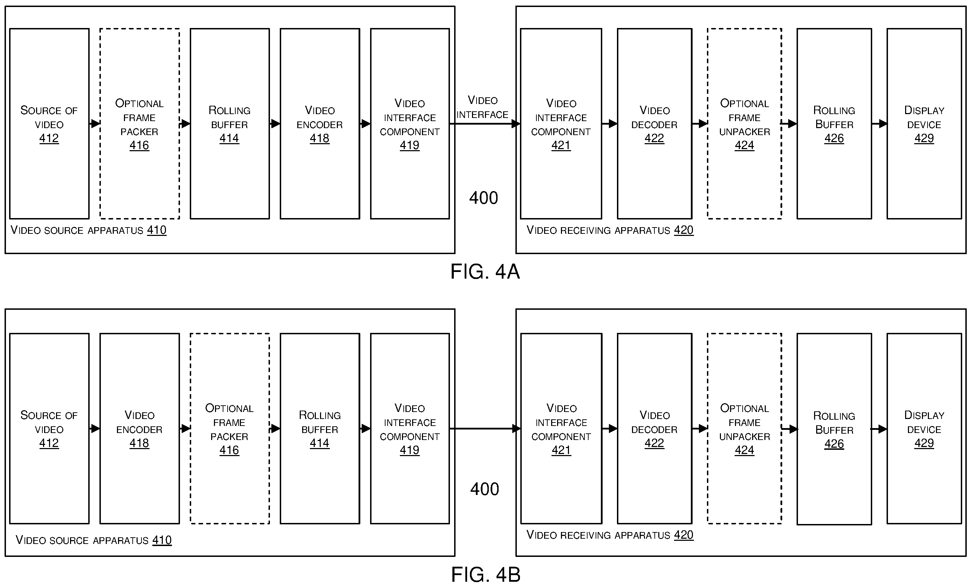

Figures 4A and 4B show example architectures 400 in which the methods described above can be implemented. Both Figures 4A and 4B show a video source apparatus 410 and a video receiving apparatus 420. The video source apparatus 410 can also be known as a video originating device or a video streamer or a video source device. In both Figure 4A and 4B, the video source apparatus 410 comprises a source of video 412. The source of video 412 can in some examples comprise a high frame rate video camera or other source of live video. The source of video 412 can also comprise a graphics processor rending the high frame rate video. In both Figures 4A and 4B, the video source apparatus 410 further comprises a rolling buffer 414.

In Figure 4A pixels of the high frame rate video are packed into an output frame before the pixels of the output frame are encoded into the pixel format of the interface video format. In Figure 4B the pixels of the high frame rate video are packed into an output frame after the pixels of the output frame are encoded into the pixel format of the interface video format. In both examples, the encoding into the pixel format of the interface video format can comprise encoding into the correct pixel packing format and this is done on a pixel-by-pixel basis.

In the example shown in Figure 4A the source of video 412 writes the pixels of the video directly into the rolling buffer 414. Hence, the source of video 412 performs the packing operations described in step 110 above. However, in other examples an optional frame packer 416 can be positioned between the source of video 412 and the rolling buffer 414 wherein the source of video 412 outputs video to the optional frame packet 416 and the frame packer 416 then performs the packing operations described in step 110 above. The step of outputting pixels from the rolling buffer 414 described in step 120 above, and which occurs as pixels are being written into the rolling buffer 414, is then performed to a video encoder 418 which also forms part of the video source apparatus 410. The video encoder 418 encodes the pixel format of the output frames into the pixel format of the interface video format on a pixel-by-pixel basis and outputs the output frame pixel by pixel to a standard video interface component 419 which transmits the pixels of the output frame to the video receiving apparatus 420.

In the example shown in Figure 4B, the source of video 412 outputs high frame rate video frames to a video encoder 418 which converts the pixels of the high frame rate video to the pixel format of the interface video format on a pixel-by-pixel basis. In some examples, this video encoder 418 then writes the pixels to a rolling buffer 414 of the video source apparatus 410 by performing the packing described in step 110 above. However, in other examples, the video encoder 418 passes the pixels of encoded high frame rate video frames to an optional frame packer 416 which forms part of the video source apparatus 410 and which performs the packing operations into the rolling buffer 414 described in step 110 above. The pixels of the encoded high frame rate video frames are then output to a standard video interface component 419 on a pixel-by-pixel basis which transmits the pixels to the video receiving apparatus 420.

In both Figures 4A and 4B the video source apparatus comprises a standard video interface component 421, a video decoder 422, an optional frame unpacker 424, a rolling buffer 426 and a display device 429. The output frame from the video source apparatus 410 is received at the standard video interface component. As shown in Figures 4A and 4B, the frame is then decoded on a pixel-by-pixel basis into a format used by the display device. The pixels of the output frame are then written to the rolling buffer 426. As the pixels of the output frame are written into the rolling buffer, they are also output from the rolling buffer 426 delayed or offset compared to the writing as discussed above. In some instances, the video decoder 422 can write the pixels directly into the rolling buffer 426. However, in other instances, the video decoder 422 can pass the pixels to the optional frame unpacker 424 which can write the pixels to the rolling buffer 426. While the above example has described the encoding into the correct pixel format occurring before writing into the rolling buffer 426, in other examples this process can occur as the high frame rate frames are read out of the rolling buffer 426. Again, this would be done on a pixel-by-pixel basis without requiring a frame buffer.

The video source can comprise a computing device comprising a processor and a memory, the memory comprising instructions that when executed cause the processor to perform the methods of the video source described above. In some examples, the video source can comprise a source of video such as a high frame rate video camera. In addition, the video source may comprise a user input device such as a mouse or keyboard enabling the user to provide commands or other inputs. The video source can also comprise a standard video interface over which video is transmitted to the video receiving device.

The video receiving device can also comprise a computing device comprising a processor and a memory, the memory containing instructions that when executed cause the processor to perform the methods of the video receiving device described above. The video receiving device also includes a display which can comprise a virtual or augmented reality display. Thus, in some examples the video receiving device can comprise a head mounted display and the display of the video receiving device can comprise a display of a head mounted display. The video receiving device comprises a standard video interface over which video is received from the video source.

The above methods and apparatus provide a technique for using standard interface video transmission technologies for transmitting high frame rate video without introducing latency. The above methods and apparatus allow existing video interfaces to be used with high frame rate video removing the need to develop new or specific protocols for communication of high frame rate video. The high frame rate video can be used for any application where high frame rate video is required, e.g. to view high frame rate video at a secondary display device either at full or reduced speed. Another potential use is virtual or augmented reality applications. In particular, in virtual or augmented reality applications video transmitted at standard frame rates such as 60Hz, or lower than 240 Hz can result in objects being incorrectly positioned as a user shifts their view within the environment. This is because the delay in updating the position of the object is seen, from the perspective of the user, as an incorrectly positioned object. Using relatively high frame rate video e.g. video with a frame rate of at least 300Hz overcomes this issue by ensuring objects are correctly positioned. The system and methods of the present application provide such high frame rate video through a standard video interface preventing the need for video interfaces to be specifically developed and also allowing the use of conventional video interfaces in such virtual reality applications.

The above has described techniques for transmitting high frame rate video frames using a standard video interface by packing multiple frames of high frame rate video into a single output frame in the standard video interface format. This has advantages in enabling the transmission of high frame rate video using standard video interface technology without introducing latency.

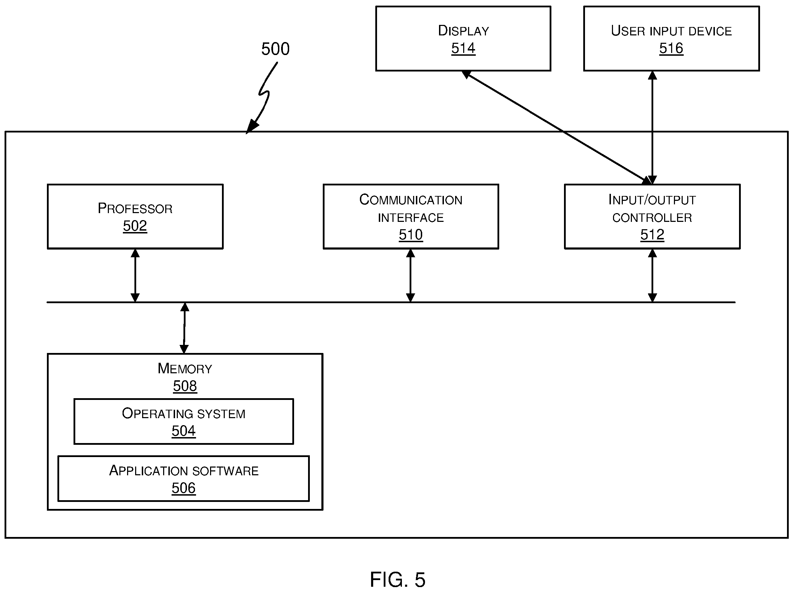

Figure 5 illustrates various components of an exemplary computing-based device 500 which may be implemented as any form of a computing and/or electronic device, and in which embodiments of the video source apparatus and/or video receiving apparatus may be implemented.

Computing-based device 500 comprises one or more processors 502 which may be microprocessors, controllers or any other suitable type of processors for processing computer executable instructions to control the operation of the device in order to process video as described above. In some examples, for example where a system on a chip architecture is used, the processors 502 may include one or more fixed function blocks (also referred to as accelerators) which implement a part of the method of Figure 1 or Figure 3 in hardware (rather than software or firmware). Platform software comprising an operating system 504 or any other suitable platform software may be provided at the computing-based device to enable application software 506 to be executed on the device.

The computer executable instructions may be provided using any computer-readable media that is accessible by computing based device 500. Computer-readable media may include, for example, computer storage media such as memory 508 and communications media. Computer storage media, such as memory 508, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 508) is shown within the computing-based device 500 it will be appreciated that the storage may be distributed or located remotely and accessed via a network or other communication link (e.g. using communication interface 510).

The computing-based device 500 also comprises an input/output controller 512 arranged to output display information to a display device 514. In regard to the video receiving apparatus, the display device 514 may be integral to the computing-based device 500. The input/output controller 512 is also or as an alternative, in some examples, arranged to receive and process input from one or more devices, such as a user input device 516 (e.g. a mouse or a keyboard). In an embodiment the display device 514 may also act as the user input device 516 if it is a touch sensitive display device. The input/output controller 512 may also output data to devices other than the display device, e.g. a locally connected printing device (not shown in Figure 500).

The term 'computer' is used herein to refer to any device with processing capability such that it can execute instructions. Those skilled in the art will realize that such processing capabilities are incorporated into many different devices and therefore the term 'computer' includes PCs, servers, mobile telephones, personal digital assistants and many other devices.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the spirit or scope of this invention.

## Claims

1. A computer implemented method (100) of transmitting high frame rate video using a standard interface video format (200), wherein the standard interface video format (200) has a lower frame rate than the high frame rate video, the method comprising:
packing (110) multiple frames of the high frame rate video (210A-210D) into rolling buffer (414) to obtain an output frame, by:
inputting the multiple frames of the high frame rate video (210A-210D) into the rolling buffer (414) from an initial position in the rolling buffer (414) to a final position in the rolling buffer (414); and
in response to the inputting reaching the final position in the rolling buffer (414) continuing the inputting from the initial position in the rolling buffer (414);
outputting (120) the output frame from the rolling buffer (414) while the multiple frames of the high frame rate video (210A-210D) are being input into the rolling buffer (414) by:
outputting the output frame from the rolling buffer (414) from the initial position in the rolling buffer (414) to the final position in the rolling buffer (414); and
in response to the outputting reaching the final position in the rolling buffer (414) continuing the outputting from the initial position in the rolling buffer (414); and
transmitting (130) the output video frame to a receiving device (420) via the standard video interface (419).

2. The method (100) of claim 1, wherein inputting multiple frames of the high frame rate video (210A-210D) into the rolling buffer (414) to obtain the output frame further comprises:
inputting at least one break line (220A-220C) into the rolling buffer (414) after each frame of the multiple frames of the high frame rate video, wherein the break line (220A-220C) comprises a line of pixels and each pixel in the line of pixels has a predefined value.

3. The method (100) of claim 1 or claim 2, wherein, the rolling buffer (414) is a rolling buffer of a video encoder (418), and wherein outputting (120) the output frame comprises:
encoding the rendered multiple frames of the high frame rate video (210A-210D) into the standard interface video format prior to rending the high frame rate video into the rolling buffer (418).

4. The method (100) of claim 1 or claim 2, wherein:
the rolling buffer (414) is a rolling buffer of a high frame rate video generator (412);
outputting (120) the output frame comprises outputting the output frame to a video encoder (418); and
the method further comprises:
encoding by the video encoder (418), the output frame in the standard interface video format as the output frame is received by the video encoder before transmitting (130) the output video frame to a receiving device (420) via the standard video interface (419).

5. The method (100) of any previous claim, wherein the inputting (110) multiple frames of the high frame rate video (210A-210D) into the rolling buffer (414) and the outputting (120) the output frame from the rolling buffer (414) do not use a frame buffer.

6. A computer-implemented method (300) of receiving high frame rate video using a standard interface video format (200), wherein the standard interface video format (200) has a lower frame rate than the high frame rate video, the method comprising:
receiving (310), from a source (410) over the standard video interface (421), a frame of video (200) in the standard interface video format, wherein the received frame of video (200) comprises multiple frames of high frame rate video (210A-210D);
writing (320), on a pixel-by-pixel basis, the frame of video (200) into a rolling buffer (426) by writing pixels of the received frame of video (200) into the rolling buffer (426) from an initial position in the rolling buffer (426) to a final position in the rolling buffer (426) as the frame of video (200) is received from the source;
determining a beginning of a first frame (210A) of high frame rate video of the multiple frames of high frame rate video (210A-210D) is being written (320) into the rolling buffer (426);
after elapse of a predetermined number of pixels or a predetermined time from the beginning of the first frame (210A) of high frame rate video being written into the rolling buffer, outputting (330), to a display device, on a pixel-by-pixel basis, pixels of the first frame (210A) of high frame rate video from the rolling buffer (426) until the first frame (210A) of high frame rate video has been output to the display device (429);
determining a beginning of a second frame (210B) of high frame rate video of the multiple frames of high frame rate video (210A-210D) is being written (340) into the rolling buffer (426);
after elapse of the predetermined number of pixels or the predetermined time from the beginning of the second frame (210B) of high frame rate video being written into the rolling buffer (426), outputting (350), to the display device (429), on a pixel-by-pixel basis, pixels of the second frame (210B) of high frame rate video from the rolling buffer (426) until the second frame (210B) of high frame rate video has been output to the display device (429).

7. The method (300) of claim 6, wherein:
the received frame of video (200) comprises one or more instances of at least one break line (220A-220C), wherein each instance of the at least one break line (220A-220C) separates a frame of the multiple frames of high frame rate video from another frame of the high frame rate video, and each the break line (220A-220C) comprises a line of pixels and each pixel in the line of pixels has a predefined value; and
wherein determining the beginning of a second frame of high frame rate video occurs in response to the break line.

8. The method (300) of claim 6 or claim 7, further comprising:
converting a pixel packing format of the received frame of video into a pixel packing format of the display device.

9. A computer-implemented method of communicating, using a standard interface video format, high frame rate from video source (210) to a video receiving apparatus (220), the method comprising:
at the video source (210) performing a method (100) according to any of claims 1 to 5; and
at the video receiving apparatus (220) performing a method (300) accord to any of claims 6 to 8.

10. The method (100; 300) of any previous claim, wherein the high frame rate video has a lower resolution than the standard interface video format.

11. A video source (410) comprising:
a standard video interface (412) configured to transmit video in a standard video interface format;
a processor (502); and
a memory (508), the memory storing instructions that when executed cause the processor to perform a method (100) according to any of claims 1 to 5.

12. The video source (410) of claim 11 further comprising:
a high frame rate video camera configured to output frames of high frame rate video.

13. A video receiving apparatus (420) comprising:
a display device (429) configured to output frames of video to a user;
a standard video interface (421) configured to receive video in a standard interface video format;
a processor (502); and
a memory (508), the memory storing instructions that when executed cause the processor to perform a method (300) according to any of claims 6 to 8.

14. The video receiving apparatus (420) of claim 13 wherein the video receiving apparatus (420) comprises a head mounted display.

15. A system (400) comprising:
a video source (410) according to claim 11 or claim 12; and
a video receiving apparatus (420) according to claim 13 or claim 14.
